# EUROPÄISCHE PATENTSCHRIFT

(11) **EP 2 753 518 B1**
(45) Veröffentlichungstag und Bekanntmachung des Hinweises auf die Patenterteilung: **02.12.2020**
(21) Anmeldenummer: 12766868.9
(22) Anmeldetag: 05.09.2012
(51) Int. Cl.: B60T 15/02, B60T 17/22

(54) **STEUERVENTILDICHTUNGEN UND STEUERVENTILE MIT DER STEUERVENTILDICHTUNG**
CONTROL VALVE SEAL AND CONTROL VALVES WITH THIS CONTROL VALVE SEAL
JOINTS DE SOUPAPES DE COMMANDE ET SOUPAPES DE COMMANDE COMPORTANT CE JOINT

(30) Priorität: 06.09.2011 DE 102011112550
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: HELLER, Martin, 85716 Unterschleißheim (DE); CZYPIONKA, Simon, 81825 München (DE); PETTER, Thomas, 80336 München (DE); HESSELBARTH, Udo, 81549 München (DE); KRYLOV, Vladimir, 127322 Moskau (RU); ROMANOV, Sergey, 111558 Moskau (RU); SIMON, Timm, 80636 München (DE)
(86) Internationale Anmeldenummer: PCT/DE2012/100267
(87) Internationale Veröffentlichungsnummer: WO 2013/034149

(56) Entgegenhaltungen:
- FR-A1- 2 685 943
- US-A- 5 869 754

## Beschreibung

Die Erfindung betrifft allgemein Fahrzeuge und insbesondere Schienenfahrzeuge. Weiterhin betrifft die Erfindung eine Steuerventildichtung und ein Steuerventil mit der Steuerventildichtu ng.

Aus dem Fachbuch Asadchenko , ABTOMaT 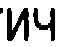 eCκ 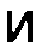 e TopMo3a Πo 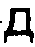 B 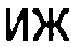 Ho 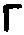 o cocTaBa 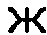 e 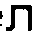 e3Ho 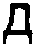 opo 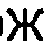 Ho 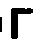 o TpaHcΠopTa, Moskau 2002, ISBN 5-89035-073-0 ist ein Pneumatisches Steuerventil zum Ansteuern eines Bremszylinders mit einem Bremszylinderdruck basierend auf einem einstellbaren Hauptdruck bekannt. Das Steuerventil umfasst einen Tragekörper mit einer den Hauptluftleitungsdruck führenden Hauptluftleitung, einer den Bremszylinderdruck führenden Bremszylinderdruckleitung und einer einen Steuerdruck führenden Steuerdruckleitung. Ferner umfasst das Steuerventil ein Leitungsteil zum Empfangen des Hauptluftleitungsdruckes aus der Hauptluftleitung und zum Einspeisen des Steuerdruckes in die Steuerdruckleitung. Das Leitungsteil ist am Tragekörper über eine Flanschverbindung gehalten. Schließlich umfasst das Steuerventil ein Hauptteil zum Empfangen des Steuerdruckes aus der Steuerdruckleitung und zum Einspeisen des Bremszylinderdruckes in die Bremszylinderdruckleitung. Auch das Hauptteil ist über eine Flanschverbindung am Tragekörper gehalten.

Die US 5 869 754 A offenbart Dichtungen zum Abdichten einer Flanschverbindung zwischen einem an einem Tragekörper ausgebildeten Flansch und einem an einer Steuerventilkomponente ausgebildeten Flansch, umfassend einen flächenförmig ausgebildeten Dichtungskörper zur Aufnahme zwischen den beiden Flanschen, einen durch den Dichtungskörper geführten Druckluftkanal zum Leiten von Druckluft zwischen den beiden Flanschen, der von einer auf dem Dichtungskörper getragenen ersten Dichtlippe umfänglich umgeben ist und eine durch den Dichtungskörper geführten zweiten Druckluftkanal zum Leiten von Druckluft zwischen den beiden Flanschen.

Es ist Aufgabe der Erfindung, das bekannte Steuerventil zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst eine Dichtung zum pneumatischen Abdichten einer Flanschverbindung zwischen einem an einem Tragekörper ausgebildeten Flansch und einem an einer Steuerventilkomponente ausgebildeten Flansch, umfassend
- einen flächenförmig ausgebildeten Dichtungskörper zur Aufnahme zwischen den beiden Flanschen,
- wenigstens einen durch den Dichtungskörper geführten Druckluftkanal zum Leiten von Druckluft zwischen den beiden Flanschen,
- eine auf dem Dichtungskörper ausgebildete erste Dichtlippe mit einer umfänglich um den Druckluftkanal verlaufenden Andruckfläche zum luftdichten Andrücken an einen der Flansche, und
- eine auf der Andruckfläche ausgebildete und die Andruckfläche teilweise bedeckende zweite Dichtlippe.

Die Steuerventilkomponente kann dabei das eingangs genannte Leitungsteil oder das Hauptteil sein.

Der angegebenen Dichtung liegt die Überlegung zugrunde, dass die Flanschverbindung absolut luftdicht sein sollte, damit aus dem durch die Flanschverbindung geführten Druckluftkanal keine Druckluft entweicht um die absoluten Drücke konstant zu halten, da Undichtigkeiten für ein Fehlverhalten des Steuerventils sorgen können. Sind die beiden Flansche der Flanschverbindung absolut eben und liegen plan aufeinander, könnte die luftdichte Verbindung allein durch die beiden Flansche der Flanschverbindung realisiert werden. Dies ist aufgrund fertigungstechnischer Toleranzen nicht realisierbar, weshalb in der Regel zwischen die beiden Flansche eine Dichtung eingesetzt wird, die die Unebenheiten der Flansche ausgleicht. Die Flansche werden mit einer hohen beispielsweise durch Verschraubung aufgebrachten Flächenkraft gegeneinander gedrückt, wodurch die Dichtung in die Unebenheiten der Flansche eingedrückt wird und diese verschließt.

Der angegebenen Dichtung liegt jedoch die Erkenntnis zugrunde, dass die Dichtung Unebenheiten auf den Flanschen nicht beliebig oder nur unter einem hohen Flächenpresskraftaufwand ausgleichen kann. Insbesondere in feine Unebenheiten auf der Flanschoberfläche, wie Kratzer, kann das Material der Dichtung nicht beliebig eindringen und die Unebenheit verschließen. Daher muss die Oberfläche der an der Flanschverbindung mit dem Druckluftkanal beteiligten Flansche weiterhin mit einer sehr hohen Güte und möglichst geringen Toleranzen hergestellt werden, um die Flanschverbindung luftdicht auszugestalten.

Im Rahmen der angegebenen Dichtung wird jedoch erkannt, dass die Fähigkeit der Dichtung, die oben genannten feinen Unebenheiten, wie Kratzer, auszugleichen, von der Geometrie der Dichtung abhängig ist. Je filigraner die Dichtung aufgebaut ist, desto leichter fällt es ihr, in entsprechend feine und filigrane Unebenheiten einzudringen und diese auszugleichen. Jedoch kann eine Dichtung nicht beliebig filigran ausgebildet werden, da sie sonst keine großflächigen Unebenheiten mehr ausgleichen könnte.

Um mit der angegebenen Dichtung großflächige Unebenheiten als auch feine und filigrane Unebenheiten, wie Kratzer, auszugleichen wird daher vorgeschlagen, die Dichtung mit einer gestuft ausgestalteten Dichtlippe auszubilden. Beispielsweise kann eine erste, als Grunddichtlippe ausgebildete Dichtlippe die großflächigen Unebenheiten ausgleichen, während eine zweite, auf die Grunddichtlippe aufgesetzte Dichtlippe entsprechend filigran aufgebaut ist und so die filigranen Unebenheiten ausgleicht.

Auf diese Weise können Toleranzanforderungen an die Flansche der Flanschverbindungen gesenkt werden, wodurch die Flansche selbst mit kostengünstigeren Verfahren hergestellt werden können, so dass das entsprechende Steuerventil kostengünstiger wird.

In einer Weiterbildung der angegebenen Dichtung ist die zweite Dichtlippe um den Druckluftkanal umlaufend ausgebildet. Zwar reicht es, wenn die zweite Dichtlippe an Stellen ausgebildet ist, an denen die entsprechenden filigranen Unebenheiten auftreten, ist jedoch von vorn herein nicht bekannt, wo diese liegen, so sollte die zweite Dichtlippe ebenfalls umfänglich um den Druckluftkanal ausgebildet werden.

In einer besonderen Weiterbildung der angegebenen Dichtung beträgt eine Auflagefläche der zweiten Dichtlippe auf der Andruckfläche der ersten Dichtlippe maximal 30%, vorzugsweise 20%, besonders bevorzugt 10% der Andruckfläche der ersten Dichtlippe.

In einer bevorzugten Weiterbildung der angegebenen Dichtung beträgt von der Fläche des Dichtungskörpers aus betrachtet eine Höhe der zweiten Dichtlippe maximal 10%, vorzugsweise 5%, besonders bevorzugt 1% der Höhe der ersten Dichtlippe.

In einer anderen Weiterbildung der angegebenen Dichtung sind die erste Dichtlippe und die zweite Dichtlippe einstückig ausgebildet. Die einstückige Ausbildung hat den Vorteil, dass die zweite, filigrane Dichtlippe durch die erste Dichtlippe beim Einbau zwischen die beiden Flansche stabil in einer vorbestimmten Lage getragen wird, was den Einbau vereinfacht.

In einer zusätzlichen Weiterbildung der angegebenen Dichtung sind die erste Dichtlippe und der Dichtungskörper einstückig ausgebildet. Auf diese Weise wird die erste Dichtlippe durch den Dichtungskörper stabilisiert, was ebenfalls den Einbau zwischen die Flansche erleichtert.

In einer alternativen Weiterbildung der angegebenen Dichtung ist die Andruckfläche der ersten Dichtlippe vom Dichtungskörper aus gesehen über einer Auflagefläche auf der Dichtlippe auf dem Dichtungskörper ausgebildet. Auf diese Weise werden die Andruckkräfte auf die erste Dichtlippe auch in die zweite Dichtlippe geleitet.

In einer besonderen Weiterbildung der angegebenen Dichtung ist die Andruckfläche kreisbogenförmig ausgebildet und die zweite Dichtlippe an einer Stelle der Andruckfläche mit der höchsten Erhebung über dem Dichtungskörper angeordnet, so dass die zweite Dichtlippe zunächst mit dem entsprechend abzudichtenden Flansch der Flanschverbindung in Kontakt kommt und zum Abdichten der filigranen Unebenheiten elastisch verformt wird. Erst ab einem bestimmten ausreichend hohen Kraftaufwand kommt auch die erste Dichtlippe mit dem mit dem entsprechend abzudichtenden Flansch der Flanschverbindung in Kontakt und dichtet die großflächigen Unebenheiten ab.

In einer noch anderen Weiterbildung der angegebenen Dichtung ist die Wand des Druckluftkanals von der Dichtlippe beabstandet, so dass der durch die Dichtlippe eingebrachte Zwischenraum zwischen Flansch und Dichtkörper einen zusätzlichen pneumatischen Widerstand einbringt, was die Dichtwirkung ebenfalls verbessert.

Alternativ könnte in der angegebenen Dichtung die Wand des Druckluftkanals an der Dichtlippe angeordnet sein, so dass die Strömung der durch den Druckluftkanal strömenden Druckluft nicht beeinflusst wird.

Gemäß einem weiteren Aspekt der Erfindung umfasst ein pneumatisches Steuerventil zum Ansteuern eines Bremszylinders mit einem Bremszylinderdruck basierend auf einem einstellbaren Hauptluftleitungsdruck:
- einen Tragekörper mit einer den Hauptluftleitungsdruck führenden Hauptluftleitung und einer den Bremszylinderdruck führenden Bremszylinderdruckleitung, und
- ein Hauptteil zum Verändern des Bremszylinderdruckes in der Bremszylinderdruckleitung basierend auf einer Veränderung des Hauptluftleitungsdruckes, das über eine Flanschverbindung am Tragekörper gehalten ist, die mit einer angegebenen Steuerventildichtung abgedichtet ist.

In einer Weiterbildung umfasst das angegebene pneumatisches Steuerventil ein Leitungsteil zum Ausgeben eines Steuerdruckes basierend auf der Veränderung des Hauptluftleitungsdruckes, das über eine Flanschverbindung am Tragekörper gehalten ist, die mit einer angegebenen Steuerventildichtung abgedichtet ist, wobei das Hauptteil eingerichtet ist, den Bremszylinderdruck basierend auf dem Steuerdruck zu verändern

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine vereinfachtes Prinzipdiagramm eines beispielhaften Steuerventils,
Fig. 2 eine perspektivische Ansicht eines Hauptteils des Steuerventils aus Fig. 1,
Fig. 3 eine perspektivische Ansicht eines Trägers mit einem Leitungsteil des Steuerventils aus Fig. 1,
Fig. 4 eine perspektivische Ansicht einer Dichtung des Steuerventils aus Fig. 1,
Fig. 5 eine perspektivische Schnittansicht der Dichtung aus Fig. 5,
Fig. 6 eine vereinfachtes Prinzipdiagramm eines weiteren Steuerventils, und
Fig. 7 eine perspektivische Ansicht einer Steuerventildichtung des Steuerventils aus Fig. 6 zeigen.

In den Figuren werden gleiche technische Elemente mit gleichen Bezugszeichen versehen und nur einmal beschrieben.

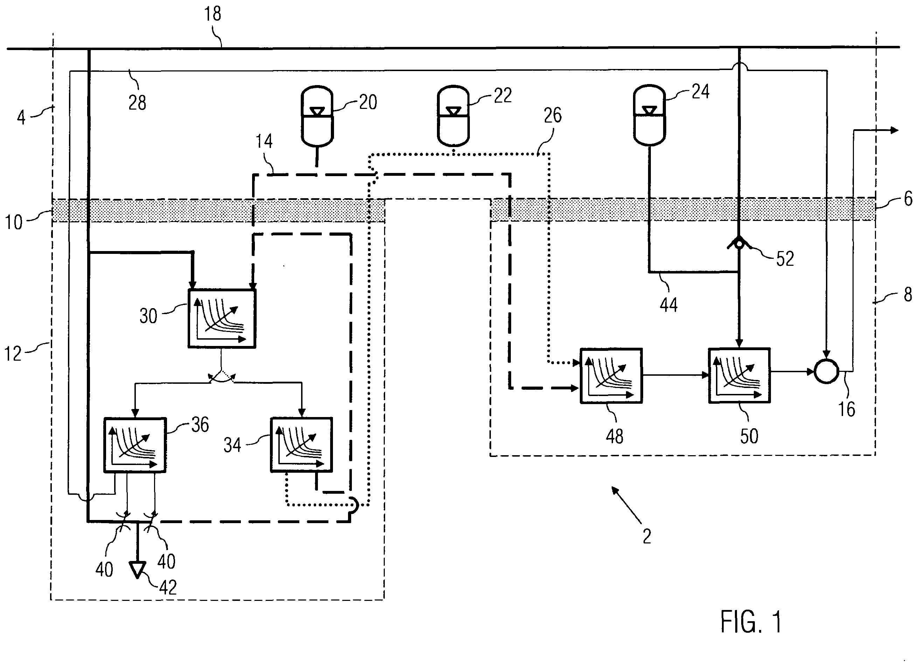

Es wird auf Fig. 1 Bezug genommen, die ein vereinfachtes Prinzipdiagramm eines beispielhaften pneumatisch betätigbaren Steuerventils 2 in einem nicht weiter dargestellten Schienenfahrzeug zum Ansteuern einer nicht weiter dargestellten Bremse des Schienenfahrzeugs zeigt. Es sei an dieser Stelle darauf hingewiesen, dass es eine Vielzahl verschieden funktionierender pneumatisch betätigbarer Steuerventile gibt, und dass der Einsatz der angegebenen Dichtung nicht auf das nachstehend beschriebene Steuerventil 2 eingeschränkt werden soll.

Ziel des Steuerventils 2 ist gleichzeitig aus einem einzigen von einem Fahrzeugführer des Schienenfahrzeuges vorgegebenen Hauptluftleitungsdruck 18 die Energie als auch die Information zum Betätigen aller Bremsen im oben genannte Schienenfahrzeug abzuleiten.

Das beispielhafte Steuerventil 2 weist dazu einen Tragekörper 4 auf, an dem über eine erste Dichtung 6 ein Hauptteil 8 und über eine zweite Dichtung 10 ein Leitungsteil 12 befestigt ist. Um das zuvor genannte Ziel zu verwirklichen, ist das Leitungsteil 12 dazu vorgesehen, basierend auf dem Hauptluftleitungsdruck 18 eine Information über die Betätigung der entsprechenden dem Steuerventil 2 zugeordneten Bremse in Form eines Steuerdruckes 14 abzuleiten. Demgegenüber ist das Hauptteil 8 dazu vorgesehen, unter Verwendung der Energie des Hauptluftleitungsdruckes 18 aus dem Steuerdruck 14 einen Bremszylinderdruck 16 zur Ansteuerung der oben genannten Bremse zu erzeugen. Dieser Ansatz soll nachstehend näher erläutert werden. Zur besseren Unterscheidbarkeit der Drücke ist der Steuerdruck 14 in Fig. 1 mit einer dicken gestrichelten Linie angedeutet, während der Hauptluftleitungsdruck 18 in Fig. 1 mit einer dicken durchgezogenen Linie angedeutet ist.

Der Hauptluftleitungsdruck 18 wird an alle Bremsen des oben genannten Schienenfahrzeuges gleichzeitig angelegt und daher an einer Stelle in den Tragekörper 4 hinein und an einer anderen Stelle aus dem Tragekörper 4 hinaus geführt.

Ein Steuerkammerdruckspeicher 20, ein Referenzspeicher 22 und ein Versorgungsspeicher 24 im Trägerteil 4 sind zur Stabilisierung des Steuerdruckes 14 und anderer Drücke im Steuerventil 2 vorgesehen.

Zur Ableitung der Bremsbetätigungsinformation aus dem Hauptluftleitungsdruck 18 kann das Leitungsteil 12 mit dem Tragekörper 4 über die zweite Dichtung 10 den Steuerdruck 14, den Hauptluftleitungsdruck 18, einen Referenzdruck 26 und einen Vorsteuerdruck 28 austauschen. In Fig. 1 ist der Referenzdruck 26 zur besseren Erkennbarkeit mit einer dicken gepunkteten Linie dargestellt. Durch die zweite Dichtung 10 sind somit entsprechend vier pneumatische Kanäle geführt. Im Inneren weist das Leitungsteil 12 einen Hauptkolben 30 zum Vergleich des Steuerdruckes 14 und des Hauptluftleitungsdruckes 18 sowie einen Betriebsbremsbeschleuniger 36 zum Nachführen des Steuerdruckes 14 basierend auf dem Hauptluftleitungsdruck 18 im Bremsfall und Füllventile 34 zum Nachführen des Steuerdruckes 14 basierend auf dem Hauptluftleitungsdruck 18 im Bremslösefall auf.

Im Normalbetrieb des oben genannten Schienenfahrzeuges, das heißt, wenn die Bremsen weder angezogen noch gelöst werden, sollen der Steuerdruck 14 und der Hauptleitungsdruck 18 gleich groß sein.

Werden die Bremsen gelöst, erkennt das der Hauptkolben 30 in einer dem Fachmann bekannten Weise daran, dass der Hauptleitungsdruck 18 größer als der Steuerdruck 14 ist, woraufhin die Füllventile 34 aktiviert werden, die daraufhin den Steuerdruck 14 und den Referenzdruck 26 erhöhen und an den Hauptleitungsdruck 18 in einer dem Fachmann bekannten Weise anpassen. Ein entsprechend notwendiger Anschluss des Hauptluftleitungsdruckes 18 an die Füllventile 34 ist in der vorliegenden Ausführung der Übersichtlichkeit halber nicht dargestellt. Gleichzeitig werden der Steuerspeicher 20 und der Referenzspeicher 22 gefüllt. Auf diese Weise wird der oben genannte Zustand des Steuerventils 2 für den Normalbetrieb erreicht.

Werden die Bremsen angezogen, erkennt das der Hauptkolben 30 in einer dem Fachmann bekannten Weise daran, dass der Hauptluftleitungsdruck 18 kleiner als der Steuerdruck 14 ist, woraufhin der Betriebsbremsbeschleuniger 36 aktiviert wird. Der Betriebsbremsbeschleuniger 36 soll einerseits den Abfall des Hauptluftleitungsdruckes 18 möglichst schnell an vom Fahrzeugführer des Schienenfahrzeuges aus betrachtet nachfolgenden Steuerventilen weiterleiten. Dazu entlüftet der Betriebsbremsbeschleuniger 36 über einen Hahn 40 den Hauptleitungsdruck 18 gegenüber Umgebungsdruck 42. Andererseits soll der Betriebsbremsbeschleuniger 36 den Steuerdruck 14 zum Ansteuern des Hauptteils 8 erzeugen, wozu es den Steuerdruck 14 in der vorliegenden Ausführung über einen weiteren Hahn 40 mit dem Hauptleitungsdruck 18 verbindet, so dass der Steuerdruck 14 dem Hauptleitungsdruck 18 folgt. Dazu öffnet der Betriebsbremsbeschleuniger 36 einen weiteren Hahn 40, der den Steuerdruck 14 mit dem Hauptleitungsdruck 18 verbindet, so dass beide Drücke 14, 18 ausgeglichen werden. Der von den Füllventilen 34 hergestellte Referenzdruck 26 wird demgegenüber von vom Betriebsbremsbeschleuniger 36 nicht verändert. Weiter gibt der Betriebsbremsbeschleuniger 36 noch den Vorsteuerdruck 28 aus, auf dessen Erzeugung der Kürze halber nicht näher eingegangen werden soll.

Somit steckt die aus dem Hauptluftleitungsdruck 18 abgeleitete Bremsbetätigungsinformation für die vom Steuerventil 2 zu betätigende Bremse in einer nicht weiter zu erläuternden Weise in einem Druckunterschied zwischen dem Referenzdruck 26 und dem Steuerdruck 14. Weitere Informationen dazu können dem eingangs genannten Stand der Technik entnommen werden.

Das Hauptteil 8 steuert basierend auf der aus dem Hauptluftleitungsdruck 18 abgeleiteten Bremsbetätigungsinformation die Bremse an. Dazu tauscht das Hauptteil 8 über die erste Dichtung 6 mit dem Trägerteil 4 den Steuerdruck 14, den Hauptluftleitungsdruck 18, den Referenzdruck 26, den Vorsteuerdruck 28, einen noch zu beschreibenden Versorgungskammerdruck 44 und den Bremszylinderdruck 16 zur Ansteuerung der dem Steuerventil 2 zugeordneten Bremse aus.

Das Hauptteil 8 weist einen Vorsteuerkreis 48 und einen Bremsdruckregelkreis 50 auf.

Der Vorsteuerkreis 48 empfängt den Steuerdruck 14 und den Referenzdruck 26 und stellt den oben genannten Druckunterschied zwischen dem Referenzdruck 26 und dem Steuerdruck 14 fest. Dieser Druckunterschied wird durch das Leitungsteil 12 beim Anziehen der Bremse über den Betriebsbremsbeschleuniger 36 vergrößert und beim Lösen der Bremse über die Füllventile 34 verkleinert.

Basierend auf einem nicht näher referenzierten Signal aus dem Vorsteuerkreis 48, das vom zuvor genannten Druckunterschied abhängig ist, erzeugt der Regelkreis 50 unter Zuhilfenahme der Energie aus dem Hauptluftleitungsdruck 18 den Bremszylinderdruck 16. Da der Hauptluftleitungsdruck 18 vom Fahrzeugführer beim Bremsen abgesenkt wird, wird er zur Speicherung der Energie über ein Rückschlagventil 52 im Versorgungsspeicher 24 zwischengespeichert. Somit liegt am Regelkreis 50 ein Versorgungskammerdruck 44 zur Erzeugung des Bremszylinderdruckes 16 an, der nur dann gleich dem Hauptluftleitungsdruck 18 ist, wenn die vom Steuerventil 2 anzusteuernde Bremse nicht betätigt wird.

Zu einer detaillierte Darstellung der Funktionsweise des Regelkreises 50 wird auf den eingangs genannten Stand der Technik verwiesen.

Der Regelkreis 50 erzeugt den Bremszylinderdruck 16 prinzipbedingt mit einer gewissen Totzeit. Zur Verkürzung dieser Totzeit wird auf den Bremszylinderdruck 16 der Vorsteuerdruck 28 in einer dem Fachmann bekannten Weise aufgeschaltet.

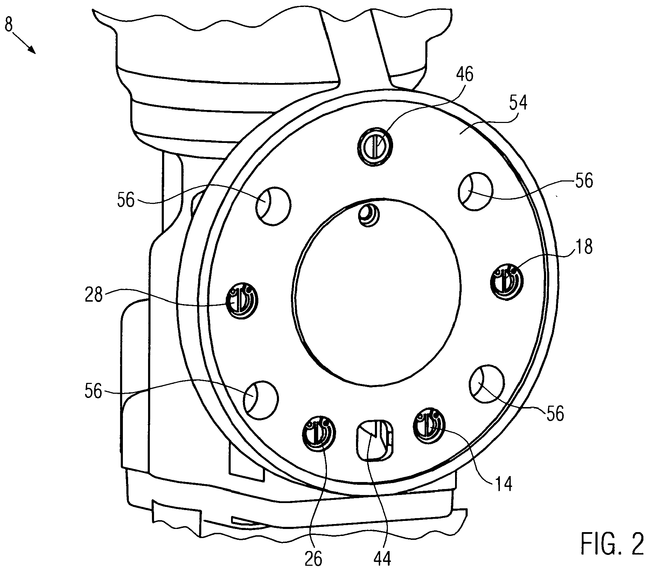

Es wird auf Fig. 2 Bezug genommen, die eine perspektivische Ansicht des Hauptteils 8 des Steuerventils 2 aus Fig. 1 zeigt.

Das Hauptteil 8 weist an seiner Rückseite einen Flansch 54 auf, der am Tragekörper 4 in einer noch zu beschreibenden Weise befestigt werden kann. Den Flansch 54 durchdringen axial Befestigungsbohrungen 56, durch die Befestigungsmittel, wie beispielsweise Schrauben geführt werden können, um das Hauptteil 8 am Tragekörper 4 zu fixieren.

Durch den Flansch 54 sind ebenfalls die Druckluftleitungen geführt, die den Steuerdruck 14, den Hauptluftleitungsdruck 18, den Referenzdruck 26, den Vorsteuerdruck 28, den Versorgungskammerdruck 44 und den Bremszylinderdruck 16 führen. Die Anordnung der einzelnen Druckluftleitungen in Fig. 2 ist applikationsabhängig und daher nur beispielhaft zu sehen.

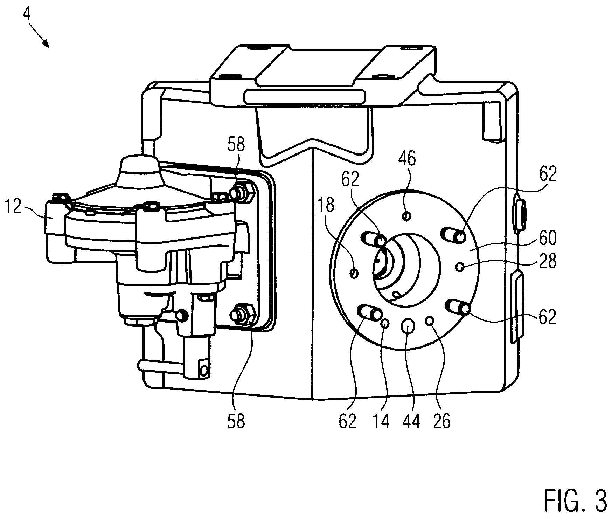

Es wird auf Fig. 3 Bezug genommen, die eine perspektivische Ansicht des Tragekörpers 4 des Steuerventils 2 aus Fig. 1 zeigt. An dem Tragekörper 4 ist das Leitungsteil 12 bereits mittels Muttern 58 befestigt. Die Muttern 58 erzeugen eine Andrucckraft, mit dem das Leitungsteil 12 gegen den Tragekörper 4 gedrückt wird.

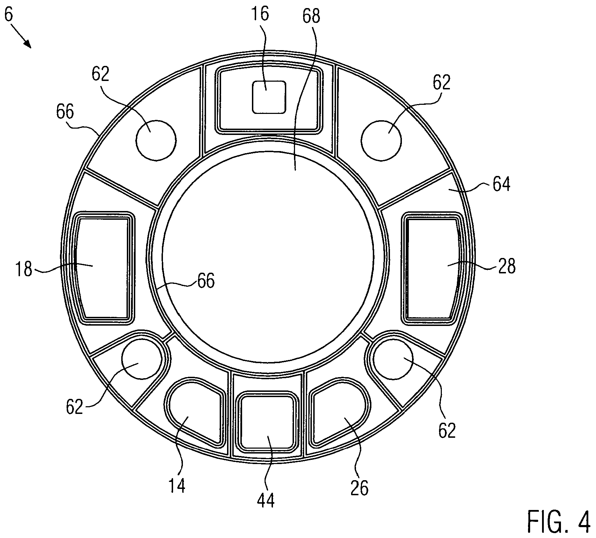

An der Stelle des Tragekörpers 4, an dem das Hauptteil 8 befestigt werden soll, ist ein weiterer Flansch 60 ausgebildet, der den Flansch 54 des Hauptteils 8 formschlüssig aufnimmt. Durch den weiteren Flansch 60 sind ebenfalls die Druckluftleitungen geführt, die den Steuerdruck 14, den Hauptluftleitungsdruck 18, den Referenzdruck 26, den Vorsteuerdruck 28, den Versorgungskammerdruck 44 und den Bremszylinderdruck 16 führen. Vom weiteren Flansch 60 ragen ferner Gewinde 62 ab, die in den Befestigungsbohrungen 56 am Flansch 54 aufgenommen und auf die die Muttern 58 aufgeschraubt werden können. Werden der Flansch 54 und der weitere Flansch 60 formschlüssig aufeinandergelegt und die Gewinde 62 in den Befestigungsbohrungen 56 aufgenommen, liegen die Druckluftleitungen zum Führen der oben genannten Drücke so aufeinander, dass die einzelnen Drücke entsprechend zwischen dem Tragekörper 4 und dem Hauptteil 8 geführt werden können. Damit aus den Druckluftleitungen an dieser Flanschverbindung keine Druckluft entweicht, wird zwischen den Flanschen 54, 60 die in Fig. 1 gezeigte erste Dichtung 6 aufgenommen, auf die in Fig. 4 näher eingegangen werden soll.

Wie in Fig. 4 zu sehen, umfasst die Dichtung 6 einen Grundkörper 64, auf dem Dichtlippen 66 ausgebildet sind. In Fig. 4 sind der Übersichtlichkeit halber nur einige der Dichtlippen mit einem Bezugszeichen versehen.

Der Grundkörper 64 ist als kreisförmige Scheibe ausgebildet, durch die mittig eine Durchgangsöffnung 68 geführt ist. Der Grundkörper 64 kann aus einem elastischen Material wie einem Nitrilkautschuk bestehen. Dabei ist eine der Dichtlippen 66 umfänglich um den Außenumfang des kreisförmigen Grundkörpers 64 und eine Dichtlippe 66 umfänglich um den Umfang der Durchgangsöffnung 68 des kreisförmigen Grundkörpers 64 gelegt. Diese beiden umfänglich geführten Dichtlippen 66 sind durch mehrere radial geführte Dichtlippen 66 miteinander verbunden. Ferner sind um die einzelnen die Drücke 14, 18, 26, 28, 44, 16 führenden Druckluftkanäle ebenfalls Dichtlippen geführt.

Dieses Dichtlippenbild ist in der vorliegenden Ausführung auf beiden Seiten der als kreisförmige Scheibe ausgebildeten Grundkörper 64 spiegelverkehrt aufgetragen, so dass die Dichtlippen 66 auf beiden Seiten des Grundkörpers 64 axial aufeinander liegen. Wird die Dichtung 6 daher zwischen den beiden Flanschen 54, 60 aufgenommen und die Flansche 54, 60 über die Muttern 58 und die Gewinde 62 gegeneinander gedrückt, dann wirkt die durch die Schraubverbindung erzeugte Andrucckraft ausschließlich auf die axial übereinander liegenden Dichtlippen 66. Dies hat den Vorteil, dass ein flächiger Schluss der Dichtlippen 66 mit den Flanschen 54, 60 mit weniger Andruckkraft hergestellt werden kann, als wenn der gesamte Grundkörper 64 auf die Flansche 54, 60 gedrückt werden würde. Auf diese Weise wird die mechanische Belastung auf die Gewinde 62 und die Muttern 58 reduziert, da diese weniger Zugkraft zum Zusammenpressen der Flansche 54, 60 aufnehmen müssen.

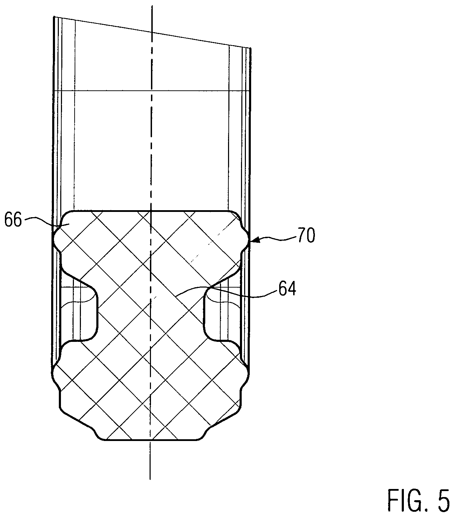

Es wird auf Fig. 5 Bezug genommen, die eine perspektivische Schnittansicht der Dichtung 6 zeigt.

In der vorliegenden Ausführung ist axial auf die Dichtlippen 66 eine weitere kleinere Dichtlippe 70 aufgesetzt, so dass die gesamte resultierende Dichtlippe gestuft ausgeführt ist. Die unter der weiteren Dichtlippe 70 liegende Dichtlippe 66 soll nachstehend als Grunddichtlippe 66 bezeichnet werden, während die weitere Dichtlippe 70 nachstehend als Zusatzdichtlippe 70 bezeichnet werden soll.

Die Grunddichtlippe 66 kann jede beliebige Querschnittsform aufweisen, wie beispielsweise oval, rechteckig oder trapezförmig. In gleicher Weise kann auch die Zusatzdichtlippe 70 jede beliebige Querschnittsform aufweisen.

Wird die Dichtung 6 auf die Oberfläche der Flansche 54, 60 gedrückt, so wird zunächst die Zusatzdichtlippe 70 in kleinere Fehlstellen auf der Flanschoberfläche wie Kratzer und andere Unebenheiten gedrückt und gleicht diese aus. Ab einer bestimmten Andruckkraft ist die Zusatzdichtlippe 70 soweit zusammengepresst, dass auch die Grunddichtlippe 66 mit dem Flansch 54, 60 in Kontakt kommt und seine Dichtfunktion in der oben beschriebenen Weise erfüllt.

Die angegebene Dichtung 6 dichtet neben der Dichtfunktion der Grunddichtlippe 66 auch Kratzer auf der Oberfläche der Flansche 54, 60 ab und weist daher eine verbesserte Dichtwirkung auf.

Die zuvor genannten Überlegungen wurden anhand der ersten Dichtung 6 beschrieben. Sie können aber auch auf die zweite Dichtung 10 zwischen dem Leitungsteil 12 und dem Tragekörper 4 zur Anwendung kommen.

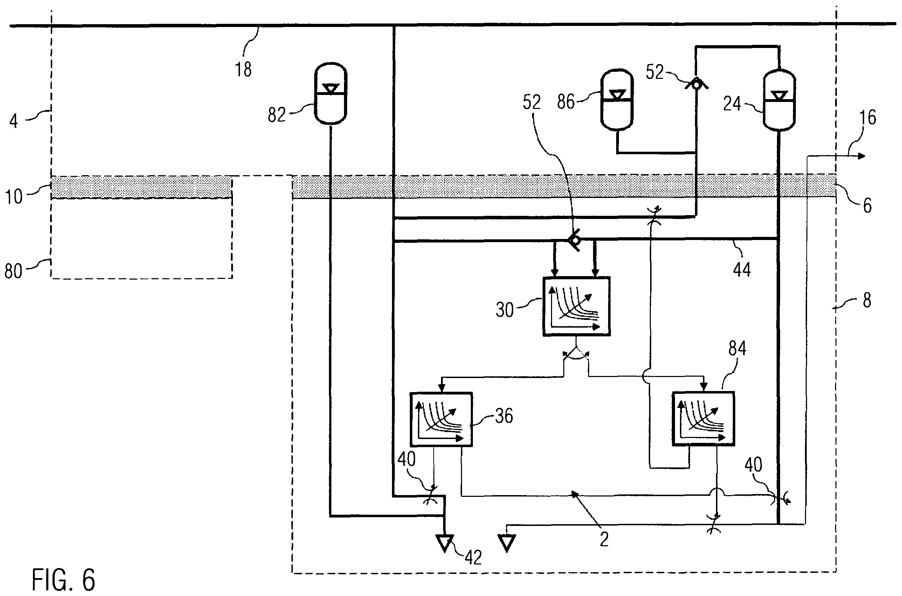

Es wird auf Fig. 6 Bezug genommen, die ein vereinfachtes Prinzipdiagramm eines alternativen Steuerventils 2 zeigt.

Das alternative Steuerventil 2 weist einen Tragekörper 4 auf, an dem das Hauptteil 8 über die erste Steuerventildichtung 6 befestigt ist. Weiter weist das alternative Steuerventil 2 ein Notbremsteil 80 auf, das über die zweite Steuerventildichtung 10 am Tragekörper 4 befestigt ist. Für den normalen Bremsbetrieb ist das Notbremsteil 80 nicht notwendig, weshalb auf eine detaillierte Darstellung nachstehend verzichtet werden soll.

Anders als im Steuerventil 2 der Fig. 1 wird im vorliegenden alternativen Steuerventil 2 der Bremszylinderdruck 16 im Hauptteil 8 direkt aus dem Hauptluftleitungsdruck 18 abgeleitet. Dazu ist der Hauptkolben 30 im Hauptteil 8 angeordnet. Der Hauptkolben 30 stellt den Hauptluftleitungsdruck 18 dem Versorgungskammerdruck 44 gegenüber und stellt Differenzen zwischen diesen beiden Drücken 18, 44 fest.

Ist der Hauptluftleitungsdruck 18 kleiner als der Versorgungskammerdruck 44, dann hat der Führer des nicht gezeigten Schienenfahrzeuges wie im Rahmen der Fig. 1 erläutert eine Bremsung eingeleitet. Der nun im Hauptteil 8 angeordnete Betriebsbremsbeschleuniger 36 entlüftet wieder die den Hauptluftleitungsdruck 18 führende Hauptluftleitung über einen Hahn 40, legt jedoch gleichzeitig den Versorgungskammerdruck 44 über einen weiteren Hahn 40 als Bremszylinderdruck 16 direkt an den Bremszylinder an.

Wie bereits diskutiert, hat die Entlüftung der den Hauptluftleitungsdruck 18 führenden Hauptluftleitung den Hintergrund, dass auf das Steuerventil 2 nachfolgenden Steuerventile im nicht gezeigten Schienenfahrzeug möglichst zeitnah über die eingeleitete Bremsung benachrichtigt werden sollen. Dazu sollte jedoch anfänglich ein möglichst hoher stoßartiger Druckabfall erfolgen, der anschließend nur langsam weitergeführt wird. Dies wird durch einen ein Impulsvolumen aufbauenden Impulsspeicher 82 erreicht, der nach dem entlüftenden Hahn 40 parallel zum Umgebungsdruck 42 geschaltet ist. Der Impulsspeicher 82 ist im Normalbetrieb mit dem Umgebungsdruck 42 gefüllt. Mit der Entlüftung wird der Hauptluftleitungsdruck 18 nicht nur in Richtung des Umgebungsdruckes 42 sondern auch in den Impulsspeicher 82 geleitet, bis dieser gefüllt ist. Danach wird der Hauptluftleitungsdruck 18 nur noch in Richtung des Umgebungsdruckes 42 entlüftet.

Ist der Hauptluftleitungsdruck 18 jedoch größer als der Versorgungskammerdruck 44, dann hat der Führer des nicht gezeigten Schienenfahrzeuges wie im Rahmen der Fig. 1 erläutert die Bremsung beendet, und die Bremsen sollen gelöst werden.

In der vorliegenden Ausführung wird der Bremszylinderdruck 16 dazu von einer Löseeinrichtung 84 über einen Hahn 40 an den Umgebungsdruck 42 angeglichen, und die mit dem Bremszylinderdruck 16 betätigten Bremszylinder entlüftet. Es sei an dieser Stelle darauf hingewiesen, das beim beenden der Bremsung der Betriebsbremsbeschleuniger 36 inaktiv und damit alle vom Betriebsbremsbeschleuniger kontrollierten Hähne 40 geschlossen sind.

Zur möglichst zeitnahen Weiterhabe der Information über das beendete Bremsen an auf das Steuerventil 2 folgende Steuerventile im nicht näher dargestellten Schienenfahrzeug, ist in der vorliegenden Ausführung ein Lösebeschleunigungsspeicher 86 vorgesehen. Der Lösebeschleunigungsspeicher 86 wird seriell zum Versorgungsspeicher 24 gefüllt, das heißt, dass zunächst der Versorgungsspeicher 24 gefüllt wird, der dann wiederum den Lösebeschleunigungsspeicher 86 füllt. Zum Ende der Bremsung legt die Löseeinrichtung 84 den Lösebeschleunigungsspeicher 86 dann über einen weiteren Hahn 40 an den Hauptleitungsdruck 18 an und erhöht diesen so impulsartig, was dann wiederum von nachfolgenden Steuerventilen zum Beenden des Bremsens detektiert werden kann.

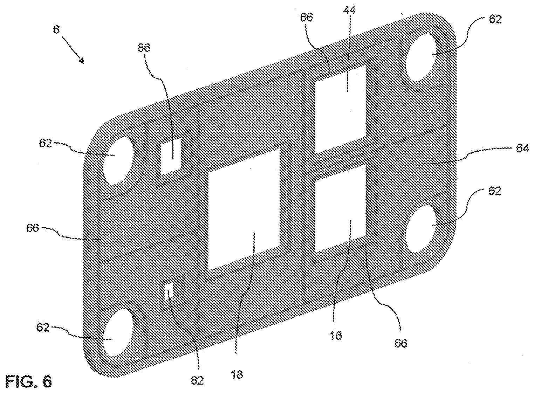

Es wird auf Fig. 7 Bezug genommen, die eine perspektivische Ansicht der Steuerventildichtung 6 des weiteren Steuerventils aus Fig. 7 zeigt.

Die in Fig. 7 gezeigten und teilweise nicht referenzierten Dichtlippen 66 können in der gleichen Weise aufgebaut sein, wie die Dichtlippen der Fig. 4.

## Patentansprüche

1. Dichtung (6) zum Abdichten einer Flanschverbindung zwischen einem an einem Tragekörper (4) ausgebildeten Flansch (54) und einem an einer Steuerventilkomponente (8, 12) ausgebildeten Flansch (60), umfassend
- einen flächenförmig ausgebildeten Dichtungskörper (64) zur Aufnahme zwischen den beiden Flanschen (54, 60),
- wenigstens einen durch den Dichtungskörper (64) geführten Druckluftkanal (12, 18, 26, 28, 44, 16) zum Leiten von Druckluft zwischen den beiden Flanschen (54, 60),
- eine auf dem Dichtungskörper (64) ausgebildete erste Dichtlippe (66) mit einer umfänglich um den Druckluftkanal (12, 18, 26, 28, 44, 16) verlaufenden Andruckfläche zum luftdichten Andrücken an einen der Flansche (54, 60), **dadurch gekennzeichnet, dass** eine auf der Andruckfläche ausgebildete und die Andruckfläche teilweise bedeckende zweite Dichtlippe (70) vorgesehen ist.

2. Dichtung nach Anspruch 1, wobei die zweite Dichtlippe (70) um den Druckluftkanal (12, 18, 26, 28, 44, 16) umlaufend ausgebildet ist.

3. Dichtung nach Anspruch 1 oder 2, wobei eine Auflagefläche der zweiten Dichtlippe (70) auf der Andruckfläche der ersten Dichtlippe (66) maximal 30%, vorzugsweise 20%, besonders bevorzugt 10% der Andruckfläche der ersten Dichtlippe (66) beträgt.

4. Dichtung nach einem der vorstehenden Ansprüche, wobei von der Fläche des Dichtungskörpers (64) aus betrachtet eine Höhe der zweiten Dichtlippe (70) maximal 10%, vorzugsweise 5%, besonders bevorzugt 1% der Höhe der ersten Dichtlippe (66) beträgt.

5. Dichtung nach einem der vorstehenden Ansprüche, wobei die erste Dichtlippe (66) und die zweite Dichtlippe (70) einstückig ausgebildet sind.

6. Dichtung nach einem der vorstehenden Ansprüche, wobei die erste Dichtlippe (66) und der Dichtungskörper (64) einstückig ausgebildet sind.

7. Dichtung nach einem der vorstehenden Ansprüche, wobei die Andruckfläche der ersten Dichtlippe (66) vom Dichtungskörper (64) aus gesehen über einer Auflagefläche auf der ersten Dichtlippe (66) auf dem Dichtungskörper (64) ausgebildet ist.

8. Dichtung nach einem der vorstehenden Ansprüche, wobei die Andruckfläche kreisbogenförmig ausgebildet und die zweite Dichtlippe (70) an einer Stelle der Andruckfläche mit der höchsten Erhebung über dem Dichtungskörper (64) angeordnet ist.

9. Dichtung nach einem der vorstehenden Ansprüche, wobei eine Wand des Druckluftkanals (12, 18, 26, 28, 44, 16) wenigstens teilweise an der ersten Dichtlippe (66) anliegt.

10. Pneumatisches Steuerventil (2) zum Ansteuern eines Bremszylinders mit einem Bremszylinderdruck (64) basierend auf einem einstellbaren Hauptluftleitungsdruck (18) umfassend:
- einen Tragekörper (4) mit einer den Hauptluftleitungsdruck (18) führenden Hauptluftleitung und einer den Bremszylinderdruck (64) führenden Bremszylinderdruckleitung, und
- ein Hauptteil (8) zum Verändern des Bremszylinderdruckes (16) in der Bremszylinderdruckleitung basierend auf einer Veränderung des Hauptluftleitungsdruckes (18), das über eine Flanschverbindung (54, 60) am Tragekörper (4) gehalten ist, die mit einer Steuerventildichtung (6) nach einem der vorstehenden Ansprüche abgedichtet ist.

11. Pneumatisches Steuerventil (2) nach Anspruch 10, umfassend ein Leitungsteil (12) zum Ausgeben eines Steuerdruckes (14) basierend auf der Veränderung des Hauptluftleitungsdruckes (18), das über eine Flanschverbindung (54, 60) am Tragekörper (4) gehalten ist, die mit einer Steuerventildichtung (6) nach einem der vorstehenden Ansprüche abgedichtet ist, wobei das Hauptteil (8) eingerichtet ist, den Bremszylinderdruck (16) basierend auf dem Steuerdruck zu verändern.

## Claims

1. Seal (6) for sealing a flanged joint between a flange (54) which is formed on a supporting body (4) and a flange (60) which is formed on a control valve component (8, 12), comprising
- a seal body (64) of laminar configuration for being received between the two flanges (54, 60),
- at least one compressed air duct (12, 18, 26, 28, 44, 16) which is guided through the seal body (64) for guiding compressed air between the two flanges (54, 60),
- a first sealing lip (66) which is formed on the seal body (64) with a pressing face which runs circumferentially around the compressed air duct (12, 18, 26, 28, 44, 16) for pressing onto one of the flanges (54, 60) in an air-tight manner, **characterized in that** a second sealing lip (70) is provided which is formed on the pressing face and covers the pressing face partially.

2. Seal according to Claim 1, the second sealing lip (70) being configured so as to run around the compressed air duct (12, 18, 26, 28, 44, 16).

3. Seal according to Claim 1 or 2, a bearing face of the second sealing lip (70) on the pressing face of the first sealing lip (66) being at most 30%, preferably 20%, particularly preferably 10% of the pressing face of the first sealing lip (66).

4. Seal according to one of the preceding claims, as viewed from the face of the seal body (64), a height of the second sealing lip (70) being at most 10%, preferably 5%, particularly preferably 1% of the height of the first sealing lip (66).

5. Seal according to one of the preceding claims, the first sealing lip (66) and the second sealing lip (70) being configured in one piece.

6. Seal according to one of the preceding claims, the first sealing lip (66) and the seal body (64) being configured in one piece.

7. Seal according to one of the preceding claims, the pressing face of the first sealing lip (66) being formed above a bearing face on the first sealing lip (66) on the seal body (64), as viewed from the seal body (64).

8. Seal according to one of the preceding claims, the pressing face being of circularly arcuate configuration and the second sealing lip (70) being arranged at a location of the pressing face with the highest elevation above the seal body (64).

9. Seal according to one of the preceding claims, a wall of the compressed air duct (12, 18, 26, 28, 44, 16) bearing at least partially against the first sealing lip (66) .

10. Pneumatic control valve (2) for actuating a brake cylinder with a brake cylinder pressure (64) based on an adjustable main air line pressure (18) comprising:
- a supporting body (4) having a main air line which conducts the main air line pressure (18) and a brake cylinder pressure line which conducts the brake cylinder pressure (64), and
- a main part (8) for changing the brake cylinder pressure (16) in the brake cylinder pressure line based on a change in the main air line pressure (18), which main part (8) is held on the supporting body (4) via a flanged joint (54, 60) which is sealed by way of a control valve seal (6) according to one of the preceding claims.

11. Pneumatic control valve (2) according to Claim 10, comprising a line part (12) for outputting a control pressure (14) based on the change in the main air line pressure (18), which line part (12) is held on the supporting body (4) via a flanged joint (54, 60) which is sealed by way of a control valve seal (6) according to one of the preceding claims, the main part (8) being set up to change the brake cylinder pressure (16) based on the control pressure.

## Revendications

1. Joint (6) pour rendre étanche un bridage entre une bride (54), constituée sur un corps (4) de support, et une bride (60), constituée sur un élément (8, 12) de soupape de commande, comprenant
- un corps (64) de joint, constitué en forme de surface, à recevoir entre les deux brides (54, 60),
- au moins un canal (12, 18, 26, 28, 44, 16) pour de l'air comprimé, traversant le corps (64) du joint pour conduire de l'air comprimé entre les deux brides (54, 60),
- une première lèvre (66) d'étanchéité, constituée sur le corps (64) du joint, en ayant une surface d'application d'une pression, s'étendant en faisant le tour du canal (12, 18, 26, 28, 44, 16) pour de l'air comprimé, afin de s'appliquer d'une manière étanche à l'air à l'une des brides (54, 60), **caractérisé en ce que**
il est prévu une deuxième lèvre (70) d'étanchéité, constituée sur la surface d'application d'une pression et recouvrant, en partie, la surface d'application d'une pression.

2. Joint suivant la revendication 1, dans lequel la deuxième lèvre (70) d'étanchéité est constituée de manière à faire le tour du canal (12, 18, 26, 28, 44, 16) pour de l'air comprimé.

3. Joint suivant la revendication 1 ou 2, dans lequel une surface de support de la deuxième lèvre (70) d'étanchéité, sur la surface d'application d'une pression de la première lèvre (66) d'étanchéité, représente au maximum 30%, de préférence 20%, d'une manière particulièrement préférée 10% de la surface d'application d'une pression de la première lèvre (66) d'étanchéité.

4. Joint suivant l'une des revendications précédentes, dans lequel, considéré à partir de la surface du corps (64) du joint, une hauteur de la deuxième lèvre (70) d'étanchéité représente au maximum 10%, de préférence 5%, d'une manière particulièrement préférée 1% de la hauteur de la première lèvre (66) d'étanchéité.

5. Joint suivant l'une des revendications précédentes, dans lequel la première lèvre (66) d'étanchéité et la deuxième lèvre (70) d'étanchéité sont constituées d'une seule pièce.

6. Joint suivant l'une des revendications précédentes, dans lequel la première lèvre (66) d'étanchéité et le corps (64) du joint sont constitués d'une seule pièce.

7. Joint suivant l'une des revendications précédentes, dans lequel la surface d'application d'une pression de la première lèvre (66) d'étanchéité, considéré à partir du corps (64) du joint, est constituée sur une surface de support de la première lèvre (66) d'étanchéité sur le corps (64) du joint.

8. Joint suivant l'une des revendications précédentes, dans lequel la surface d'application d'une pression est en forme d'arc de cercle et la deuxième lèvre (70) d'étanchéité est disposée en un point de la surface d'application d'une pression ayant la surélévation la plus grande au-dessus du corps (64) du joint.

9. Joint suivant l'une des revendications précédentes, dans lequel une paroi du canal (12, 18, 26, 28, 44, 16) pour de l'air comprimé s'applique, au moins en partie, à la première lèvre (66) d'étanchéité.

10. Soupape (2) de commande pneumatique pour la commande d'un cylindre de frein par une pression (64) de cylindre de frein reposant sur une pression (18) réglable dans un conduit principal pour de l'air, comprenant :
- un corps (4) de support ayant un conduit principal pour de l'air, conduisant la pression (18) de conduit principal pour de l'air et un conduit de pression de cylindre de frein, conduisant la pression (64) de cylindre de frein, et
- une partie (8) principale pour modifier la pression (16) de cylindre de frein dans le conduit de pression de cylindre de frein, sur la base d'une modification de la pression (18) de conduit principal pour de l'air, qui est retenue au corps (4) de support par un bridage (54, 60), qui est rendu étanche par un joint (6) de soupape de commande suivant l'une des revendications précédentes.

11. Soupape (2) de commande pneumatique suivant la revendication 10, comprenant une partie (12) de conduit pour donner une pression (14) de commande sur la base de la modification de la pression (18) dans le conduit principal pour de l'air, qui est retenue au corps (4) de support par un bridage (54, 60), qui est rendu étanche par un joint (6) de soupape de commande suivant l'une des revendications précédentes, la partie (8) principale étant conçue pour modifier la pression (16) de cylindre de frein sur la base de la pression de commande.
